# EUROPÄISCHE PATENTSCHRIFT

(11) **EP 4 313 747 B1**
(45) Veröffentlichungstag und Bekanntmachung des Hinweises auf die Patenterteilung: **06.05.2026**
(21) Anmeldenummer: 22717093.3
(22) Anmeldetag: 21.03.2022
(51) Int. Cl.: B62M 6/45, B62J 45/411, B62J 45/415, B62J 45/412, B62J 45/414

(54) **VERFAHREN ZUM STEUERN EINES ELEKTROFAHRRADS SOWIE ELEKTROFAHRRAD**
METHOD OF CONTROLLING AN ELECTRIC BICYCLE AND ELECTRIC BICYCLE
PROCÉDÉ DE COMMANDE D'UNE BICYCLETTE ÉLECTRIQUE ET BICYCLETTE ÉLECTRIQUE

(30) Priorität: 30.03.2021 DE 102021203172
(43) Veröffentlichungstag der Anmeldung: 07.02.2024
(73) Patentinhaber: Robert Bosch GmbH, 70442 Stuttgart (DE)
(72) Erfinder: WEINMANN, Matthias, 72336 Balingen (DE); BAUMGAERTNER, Daniel, 72072 Tuebingen (DE); WIENSS, Andreas, 72800 Eningen Unter Achalm (DE); RECK, Joseph, 70794 Filderstadt (DE)
(86) Internationale Anmeldenummer: PCT/EP2022/057272
(87) Internationale Veröffentlichungsnummer: WO 2022/207378

(56) Entgegenhaltungen:
- EP-B1- 3 251 936
- DE-A1- 102016 224 314
- JP-A- H08 150 982
- JP-A- H1 159 557
- JP-A- H11 105 776

## Beschreibung

Die Erfindung betrifft ein Verfahren zum Steuern eines mit Motorkraft und/oder Pedalkraft betreibbaren Elektrofahrrads mit einem elektrischen Antrieb. Ferner betrifft die Erfindung ein solches Elektrofahrrad.

### Stand der Technik

EP 3 251 936 B1 offenbart ein Steuerungsverfahren für einen Elektromotor zur Regelung einer Schiebehilfe eines Elektrofahrrads in Abhängigkeit eines erfassten Neigungswinkels des Elektrofahrrads.

Ferner sind bereits Verfahren zur Absicherung einer Schiebehilfe vorgeschlagen worden. In gegenwärtigen Realisierungen einer Schiebehilfe wird ein planmäßiges Einschalten der Schiebehilfe mittels eines zweistufigen Konzepts abgesichert. Dabei wird zunächst ein Bedienelement einmalig gedrückt und somit die Schiebehilfe aktiviert, wobei sodann innerhalb einer bestimmten Zeit ein weiteres Bedienelement gehalten werden muss, um die Schiebehilfe einzuschalten.

Das Dokument DE 10 2016 224314 A1 offenbart ein gattungsgemäßes Verfahren und Elektrofahrrad.

### Offenbarung der Erfindung

Die Erfindung betrifft ein Verfahren zum Steuern eines mit Motorkraft und/oder Pedalkraft betreibbaren Elektrofahrrads, umfassend die Verfahrensschritte Bereitstellen zumindest eines Trigger-Signals zur Freigabe einer Aktivierung eines Schiebemodus und/oder eines Trigger-Signals zur Aktivierung des Schiebemodus an eine Steuereinheit des Elektrofahrrads, Bereitstellen eines Messsignals einer Sensorvorrichtung betreffend eine Eigenschaft des Elektrofahrrads und/oder betreffend eine von dem Elektrofahrrad umfasste Komponente an die Steuereinheit, Erkennen einer Plausibilität des Trigger-Signals zur Freigabe einer Aktivierung des Schiebemodus und/oder des Trigger-Signals zur Aktivierung des Schiebemodus anhand des bereitgestellten Messsignals sowie Steuern des Elektrofahrrads, indem in Abhängigkeit des Erkennens der Plausibilität des Trigger-Signals zur Freigabe einer Aktivierung des Schiebemodus die Aktivierung des Schiebemodus freigegeben wird und/oder in Abhängigkeit des Erkennens der Plausibilität des Trigger-Signals zur Aktivierung des Schiebemodus der Schiebemodus aktiviert wird, das Messsignal eine Beschleunigung als einen Bewegungszustand des Elektrofahrrads betrifft und die Plausibilität des Trigger-Signals erkannt wird, wenn der Bewegungszustand eine vorbestimmte Bedingung erfüllt.

Das Elektrofahrrad weist einen Kurbeltrieb auf, der typischerweise mit zwei Kurbeln verbunden ist, an denen jeweils ein Pedal zur Aufnahme einer von einem Fahrer des Elektrofahrrads ausgeübten Kraft angeordnet ist. Kurbeltrieb, Kurbeln und Pedale dienen der Umwandlung der durch den Fahrer ausgeübten Kraft in ein auf den Kurbeltrieb wirkendes Fahrerdrehmoment. Das Fahrerdrehmoment kann zum Vortrieb des Elektrofahrrads in ein Abtriebsdrehmoment, welches auf zumindest ein Rad des Elektrofahrrads wirkt, gewandelt werden. Das Elektrofahrrad wird in einem Betriebszustand mit einem elektrischen Antrieb, umfassend einen Motor, zumindest teilweise angetrieben. Dazu wird das Fahrerdrehmoment bei der Wandlung in das Abtriebsdrehmoment mit einem durch den elektrischen Antrieb erzeugten Antriebsdrehmoment überlagert.

Bei hochwertigen Elektrofahrrädern wird üblicherweise zumindest ein Drehmomentsensor zur Erfassung des Fahrerdrehmoments verwendet. Das erfasste Fahrerdrehmoment wird dann bei einem Unterstützungswunsch des Fahrers durch den elektrischen Antrieb, insbesondere proportional, verstärkt. Durch Erfassen mittels eines Drehmomentsensors ergibt sich für den Fahrer ein natürliches Fahrgefühl, da ein erhöhtes Einbringen einer Kraft gleichzeitig zu einer erhöhten Unterstützung bis zu einer maximalen Unterstützung führt.

Ein computerimplementiertes Verfahren zur Aktivierung eines Schiebemodus, insbesondere ein Steuerungsverfahren zur Steuerung des Schiebemodus, umfasst gemäß Stand der Technik ein zweistufiges Aktivierungskonzept, wobei die erste Stufe eine Freigabe der Aktivierung und die zweite Stufe die Aktivierung des Schiebemodus darstellen. Die Freigabe zur Aktivierung des Schiebemodus, insbesondere des Steuerungsverfahrens zur Steuerung des Schiebemodus, kann über eine separate Freigabe-Taste oder durch eine erfasste Freigabe-Eingabe an einer Bedieneinheit des Elektrofahrrads erfolgen. In Folge der Freigabe läuft eine vorgegebene Zeitspanne zur Aktivierung des Schiebemodus ab, in deren Verlauf der Nutzer des Elektrofahrrads durch Betätigen einer Aktivierungs-Eingabe die Kraftunterstützung beim Schieben des Elektrofahrrads mittels des elektrischen Antriebs aktivieren kann. Diese Aktivierungs-Eingabe wird mittels einer separaten Aktivierungs-Taste einer Bedieneinheit des Elektrofahrrads erfasst. Anschließend wird mittels des elektrischen Antriebs ein Motordrehmoment zum Schieben des Elektrofahrrads erzeugt. Typischerweise muss der Nutzer die Aktivierungs-Eingabe dauerhaft betätigen, um eine kontinuierliche Erzeugung des Motordrehmoments beim Schieben zu bewirken. Durch das zweistufige Aktivierungskonzept wird eine unerwünschte Aktivierung des Schiebemodus vermieden.

Die Steuereinheit dient der Ansteuerung der funktionalen Komponenten zumindest des elektrischen Antriebs des Elektrofahrrads und ist dazu eingerichtet, d.h. verschaltet und/oder programmiert, in Abhängigkeit zumindest eines der von dem zumindest einen Drehmomentsensor bereitgestellten Drehmomentmesssignale ein Steuersignal zur Ansteuerung des elektrischen Antriebs zu erzeugen und an den Antrieb weiterzugeben. Die Steuereinheit ist ferner dazu eingerichtet, das vorgeschlagene Verfahren zum Betrieb des Elektrofahrrads durchzuführen. Dabei ist die Steuereinheit dazu konfiguriert, ein bereitgestelltes Trigger-Signal und bereitgestellte Messsignale anzunehmen und zu verarbeiten, abhängig von Messsignalen eine Plausibilität des Trigger-Signals zu erkennen sowie in Abhängigkeit des Erkennens der Plausibilität des Trigger-Signals eine Aktivierung des Schiebemodus des Elektrofahrrads freizugeben bzw. eine den Schiebemodus zu aktivieren. Unter "Aktivierung freigeben" ist zu verstehen, dass der Schiebemodus nach Freigabe aktiviert werden kann, diese Funktion somit nicht blockiert bzw. gesperrt ist. Unter "Aktivieren" ist zu verstehen, dass der Schiebemodus ausgeführt wird.

Unter "Bereitstellen" ist zu verstehen, dass der das Verfahren durchführenden Steuereinheit, insbesondere einer Prozessorvorrichtung oder einer Computervorrichtung der Steuereinheit, entsprechende Werte und/oder Größen, insbesondere Informationen, übergeben oder signaltechnisch zugeleitet werden. Die Bereitstellung kann grundsätzlich in jeglicher Form geschehen, bevorzugt erfolgt die Bereitstellung durch eine signaltechnische Weiterleitung zumindest eines Trigger-Signal sowie eines Messsignals einer Sensorvorrichtung an die Steuereinheit.

Ein "Trigger-Signal zur Freigabe der Aktivierung" stellt insbesondere einen ersten Teil eines zweistufigen Aktivierungskonzepts dar, insbesondere eine Aktivierungsanforderung. Das Trigger-Signal wird in einer Ausführungsform des Verfahrens durch einen Nutzer des Elektrofahrrads ausgelöst, beispielsweise in Folge einer Betätigung einer Bedieneinheit. In einer alternativen oder zusätzlichen Ausführungsform des Verfahrens ist auch denkbar, das Trigger-Signal automatisiert, beispielsweise in Abhängigkeit eines Betriebszustands des Elektrofahrrads, auszulösen und der Steuereinheit bereitzustellen.

Ein "Trigger-Signal zur Aktivierung" stellt insbesondere einen zweiten Teil eines zweistufigen Aktivierungskonzepts dar, insbesondere eine Aktivierung. Das Trigger-Signal wird in einer Ausführungsform des Verfahrens durch einen Nutzer des Elektrofahrrads ausgelöst, beispielsweise in Folge einer Betätigung einer Bedieneinheit. In einer alternativen oder zusätzlichen Ausführungsform des Verfahrens ist auch denkbar, das Trigger-Signal automatisiert, beispielsweise in Abhängigkeit eines Betriebszustands des Elektrofahrrads, auszulösen und der Steuereinheit bereitzustellen.

Es sei darauf hingewiesen, dass in dieser Schrift unter "Trigger-Signal" sowohl das Trigger-Signal zur Freigabe der Aktivierung als auch das Trigger-Signal zur Aktivierung zu verstehen ist, sofern nicht explizit genannt ist, um welches Trigger-Signal es sich handelt.

Ein "Messsignal betreffend eine Eigenschaft des Elektrofahrrads und/oder eine von dem Elektrofahrrad umfasste Komponente" umfasst jegliche Form von Messsignal, die geeignet ist, einen Zustand des Elektrofahrrads zu charakterisieren, um darauf basierend die Bereitstellung des Trigger-Signals, insbesondere dessen Validität bzw. Plausibilität, zu prüfen. Unter "plausibel" ist zu verstehen, wenn das Trigger-Signal derart eingeschätzt wird, dass dessen Bereitstellung einer Situation und/oder einem Zustand, insbesondere einem Betriebszustand, des Elektrofahrrads und/oder einer Komponente des Elektrofahrrads nicht widerspricht bzw. mit dieser Situation und/oder diesem Zustand sinnvoll vereinbar ist. Ein Messsignal wird mittels einer Sensorvorrichtung erfasst, insbesondere gemessen. Unter einer Sensorvorrichtung ist dabei eine messtechnische Vorrichtung zu verstehen, die beispielsweise unter Anwendung physikalischer oder chemischer Gesetzmäßigkeiten eine Eigenschaft des Elektrofahrrads und/oder einer von dem Elektrofahrrad umfassten Komponente ermittelt.

Die vorliegende Erfindung erlaubt es, Nachteile des eingangs erläuterten Standes der Technik zu überwinden. Insbesondere ermöglicht es die vorliegende Erfindung, das gegenwärtig angewandte zweistufige Aktivierungskonzept, das für einen Nutzer des Elektrofahrrads oftmals nicht intuitiv verständlich und schwer umzusetzen ist, zu verbessern.

So ermöglicht es die vorliegende Erfindung in einem Ausführungsbeispiel in Folge eines Betätigens (beispielsweise Drücken von 2 Sekunden) eines Bedienelements einer Bedieneinheit ein Trigger-Signal zur Freigabe der Aktivierung an die Steuereinheit bereitzustellen. Als Absicherung des neuartigen Aktivierungskonzeptes ist es in diesem Ausführungsbeispiel nunmehr möglich, basierend auf Messsignalen weiterer im oder am Elektrofahrrad angeordneter Sensorik das Ausführen des Schiebemodus zu aktivieren, insbesondere zu steuern oder zu regeln, beispielsweise für den Fall, dass ein Beschleunigen des Elektrofahrrads in Schieberichtung detektiert wird. Die vorliegende Erfindung erlaubt vorteilhaft, dass bereits die Freigabe der Aktivierung des Schiebemodus in der ersten Stufe auf Grund der zusätzlichen Plausibilisierung ausreicht, um eine versehentliche und/oder unbeabsichtigte Aktivierung des Schiebemodus zu vermeiden. Sodann kann mittels einer fortan sehr intuitiven Art der Schiebemodus selbst aktiviert, insbesondere gesteuert oder geregelt, werden, auch wenn diese intuitive Art nicht mehr eindeutig einem Wunsch des Nutzers nach Aktivieren bzw. Ausführen des Schiebemodus zugeordnet werden kann.

In einem weiteren Ausführungsbeispiel ist es möglich, in Folge eines Betätigens (beispielsweise andauerndes Drücken) eines Bedienelements einer Bedieneinheit ein Trigger-Signal zur Aktivierung des Schiebemodus an die Steuereinheit bereitzustellen, wobei in Folge des Betätigens des Bedienelements ebenfalls ein Trigger-Signal zur Freigabe der Aktivierung an die Steuereinheit bereitgestellt wird. Eine Plausibilisierung des Trigger-Signals zur Freigabe der Aktivierung und/oder des Trigger-Signals zur Aktivierung des Schiebemodus anhand von Messsignalen, die mittels im oder am Elektrofahrrad angeordneter Sensorik bereitgestellt werden, erlaubt vorteilhaft, dass trotz Rückgriff auf ein einzelnes Bedienelement eine sichere Realisierung eines Aktivierungskonzepts des Schiebemodus realisiert werden kann. Die Plausibilisierung dient dabei insbesondere als zweite Stufe des Aktivierungskonzepts. Beispielsweise kann die Plausibilisierung zusätzlich zum Auswerten einer Beschleunigung auch durch Auswerten einer Geschwindigkeit des Elektrofahrrads in Schieberichtung erfolgen. Folglich lässt sich auch hier eine sehr intuitive Art der Freigabe der Aktivierung und/oder Aktivierung des Schiebemodus realisieren.

Folglich resultiert ein Elektrofahrrad mit einer erhöhten Sicherheit, das gleichzeitig eine intuitive Bedienung durch einen Nutzer ermöglicht. Davon unabhängig lassen sich ferner unterschiedliche Bedieneinheiten, insbesondere von unterschiedlichen Herstellern, mit dem Elektrofahrrad nutzen, wobei deren ordnungsgemäße Funktionalität nicht zuvor sichergestellt werden muss. Vor allem ermöglicht die Realisierung des vorgeschlagenen Verfahrens eine sichere Umsetzung eines Aktivierungskonzepts für die Aktivierung des Schiebemodus unter Verwendung nur einer notwendigen Eingabe mittels einer Bedieneinheit. Es kann die vorteilhafte Zweistufigkeit, d.h. die Absicherung, der Aktivierung unter Verwendung weiterer Sensorsignale im Rahmen einer intuitiven Bewegung (z.B. Anschieben) des Elektrofahrrads realisiert werden.

In einer Ausführungsform des Verfahrens betrifft das Messsignal eine Lage des Elektrofahrrads und die Plausibilität des Trigger-Signals wird erkannt, wenn das Elektrofahrrad aufrecht positioniert ist. Die Lage des Elektrofahrrads bezeichnet dessen Orientierung im dreidimensionalen Raum ("liegend", "stehend", etc.) und kann beispielsweise mittels Lagesensoren, insbesondere mittels zumindest dreier Lagesensoren, erfasst werden. Als Lagesensoren eigenen sich beispielsweise dem Fachmann bekannte Inertialsensoren, insbesondere eine 6D-Inertialsensorik umfassend Beschleunigungs- und/oder Drehratensensoren. Unter "aufrecht positioniert" ist insbesondere zu verstehen, dass das Fahrrad auf den Rädern stehend positioniert ist, also nicht liegt oder auf den Kopf gedreht ist. Auf diese Weise kann ausgeschlossen werden, dass das Trigger-Signal fälschlicherweise oder versehentlich ausgelöst wurde, beispielsweise in Folge eines Unfalls oder im Rahmen eines Wartungsvorgangs, bei dem ein zur Freigabe der Aktivierung des Schiebemodus vorgesehenes Bedienelement am Elektrofahrrad betätigt wird.

In einer Ausführungsform des Verfahrens betrifft das Messsignal einen Bewegungszustand des Elektrofahrrads, insbesondere eine Geschwindigkeit und/oder Beschleunigung, und die Plausibilität des Trigger-Signals wird erkannt, wenn der Bewegungszustand eine vorbestimmte Bedingung erfüllt. In einem Ausführungsbeispiel ist die vorbestimmte Bedingung als ein Schwellwert realisiert. So ist denkbar, ein Trigger-Signal nur dann als plausibel einzustufen, wenn die Vorschubgeschwindigkeit des Elektrofahrrads weniger als 6 km/h beträgt, insbesondere bei zusätzlich vernachlässigbarer Beschleunigung. Sensorik für eine Geschwindigkeitsmessung und eine Beschleunigungsmessung ist dem Fachmann grundsätzlich bekannt. Auf diese Weise kann ausgeschlossen werden, dass das Trigger-Signal fälschlicherweise oder versehentlich während der Fahrt, insbesondere durch den Nutzer des Elektrofahrrads, ausgelöst wird.

In einer Ausführungsform des Verfahrens betrifft das Messsignal ein auf den Kurbeltrieb des Elektrofahrrads aufgebrachtes Fahrerdrehmoment und die Plausibilität des Trigger-Signals wird erkannt, wenn das Fahrerdrehmoment - im Wesentlichen und im Rahmen der Toleranz - Null beträgt. Ferner ist denkbar, eine Zeitspanne, über die das Fahrerdrehmoment bereits Null beträgt, als Plausibilisierungskriterium zu nutzen. Unter "im Wesentlichen und im Rahmen der Toleranz" ist zu verstehen, dass das Messsignal nicht exakt Null sein muss, sondern geringfügige Abweichungen, beispielsweise von bis zu 5 Nm oder im Rahmen eines Messsignalrauschens, ebenfalls zu einer Plausibilisierung des Trigger-Signals führen. Auf diese Weise kann sichergestellt werden, dass das Trigger-Signal nur in solchen Situationen als plausibel eingestuft wird, in denen ein Nutzer des Elektrofahrrads dieses nicht im Rahmen von Radfahren betreibt.

In einer Ausführungsform des Verfahrens betrifft das Messsignal eine Trittfrequenz eines Nutzers und die Plausibilität des Trigger-Signals wird erkannt, wenn die Trittfrequenz - im Wesentlichen und im Rahmen der Toleranz - Null beträgt. Die Trittfrequenz kennzeichnet die Anzahl Umdrehungen des Kurbeltriebs pro Zeiteinheit, beispielsweise 60 Umdrehungen pro Minute, und kann auf unterschiedliche Weise ermittelt werden, beispielsweise mittels eines Kadenzsensors oder aus einer Drehzahl des Motors des elektrischen Antriebs. Ferner ist denkbar, eine Zeitspanne, über die die Trittfrequenz bereits Null beträgt, als Plausibilisierungskriterium zu nutzen. Unter "im Wesentlichen und im Rahmen der Toleranz" ist zu verstehen, dass das Messsignal nicht exakt Null sein muss, sondern geringfügige Abweichungen, beispielsweise von bis zu 5 Umdrehungen/min oder im Rahmen eines Messsignalrauschens, ebenfalls zu einer Plausibilisierung des Trigger-Signals führen. Auf diese Weise kann sichergestellt werden, dass das Trigger-Signal nur in solchen Situationen als plausibel eingestuft wird, in denen ein Nutzer des Elektrofahrrads dieses nicht im Rahmen von Radfahren betreibt.

In einer Ausführungsform des Verfahrens betrifft das Messsignal eine Dauer der Bereitstellung des Trigger-Signals und die Plausibilität des Trigger-Signals wird erkannt, wenn die Dauer einen vorgegebenen Schwellwert unterschreitet. Auf diese Weise kann sichergestellt werden, dass das Erzeugen des Trigger-Signals tatsächlich einem einmaligen (Einzel-)Vorgang, beispielsweise einer einmaligen Betätigung eines Bedienelements, zuzuordnen ist. Es kann sichergestellt werden, dass das Trigger-Signal nicht auf ein fehlerhaftes und somit insbesondere längerfristiges Auslösen, beispielsweise auf Grund eines mechanisch verklemmten Bedienelements, zurückzuführen ist. In einem Ausführungsbeispiel kann der Schwellwert 10 Sekunden, insbesondere 5 Sekunden oder 1 Sekunde, ganz insbesondere 0,5 Sekunden betragen. Folglich lassen sich Situationen vermeiden, die zu einem sicherheitskritischen Verhalten des Elektrofahrrads führen könnten. Die Plausibilisierung auf Basis von Messsignalen zumindest einer Sensorvorrichtung ermöglicht zu entscheiden, ob die Anforderung in der aktuellen Fahrsituation vom Fahrer gewünscht ist oder auf Grund eines Fehlers im anfordernden Gerät, beispielsweise der Bedieneinheit, zustande kommt.

In einer Ausführungsform des Verfahrens wird das Trigger-Signal zusätzlich zur Freigabe der Aktivierung des Schiebemodus ebenfalls auch zur Beibehaltung eines aktivierten Zustands (d.h. zur Aktivierung) des Schiebemodus genutzt. Dabei ist denkbar, dass das Trigger-Signal über einen längeren Zeitraum erzeugt wird (beispielsweise durch gedrückt halten eines Bedienelements einer Bedieneinheit des Elektrofahrrads). Zu Beginn wird das Trigger-Signal anhand eines Messsignals als plausibel erkannt, beispielsweise wenn mittels des Messsignals ein Anschieben des Elektrofahrrads detektiert wird, und folglich die Unterstützung durch den elektrischen Antrieb eingeschaltet. Im Folgenden wird durch die andauernde Aktivierung des Schiebemodus die Unterstützung entsprechend der Dauer der Aktivierung erzeugt. In diesem Falle ist ferner denkbar, dass eine Plausibilität des zur Aktivierung des Schiebemodus genutzten Trigger-Signals anhand eines an die Steuereinheit bereitgestellten Messsignals der Sensorvorrichtung und/oder einer weiteren Sensorvorrichtung erkannt wird. Folglich wird das andauernde Trigger-Signal zur Aktivierung ebenfalls einer Plausibilitätsprüfung anhand eines Messsignals unterzogen, beispielsweise anhand eines Messsignals, das eine Geschwindigkeit des Elektrofahrrads charakterisiert, wobei diese Geschwindigkeit 6 km/h nicht übersteigen darf. Wird die Aktivierung des Schiebemodus ausgesetzt (beispielsweise durch Loslassen des Bedienelements), so wird der Schiebemodus ausgeschaltet. Durch erneutes Aktivieren (beispielsweise erneutes Drücken des Bedienelements) kann der Schiebemodus sodann wieder eingeschaltet werden. Es ist denkbar, für das Wiedereinschalten eine Zeitschwelle vorzugeben, bei deren Überschreiten eine erneute Freigabe der Aktivierung des Schiebemodus erforderlich wird.

Es sei angemerkt, dass die Ausführungsformen des Verfahrens auch zu sinnvollen Kombinationen verbunden werden können. Beispielsweise ist denkbar, dass in der vorherigen Ausführungsform, in der das Trigger-Signal zusätzlich zur Freigabe der Aktivierung des Schiebemodus zur Beibehaltung des aktivierten Zustands des Schiebemodus genutzt wird, wobei das Trigger-Signal über einen längeren Zeitraum - und zwar solange der Schiebemodus aktiviert sein soll - erzeugt wird, eine Plausibilisierung sowohl des Trigger-Signals zur Freigabe der Aktivierung als auch das Trigger-Signal zur Aktivierung anhand eines Messsignals erfolgt, beispielsweise anhand eines Messsignals, das ein auf den Kurbeltrieb des Elektrofahrrads aufgebrachtes Fahrerdrehmoment oder eine Trittfrequenz oder eine Geschwindigkeit des Elektrofahrrads betrifft.

In einer Ausführungsform des Verfahrens wird das Trigger-Signal mittels einer Bedieneinheit durch einen Nutzer des Elektrofahrrads bereitgestellt wird. Vielfältige Bedieneinheiten, insbesondere umfassend Bedienelemente (Eingabeelemente), sind denkbar und einem Fachmann grundsätzlich bekannt. In einem Ausführungsbeispiel ist die Bedieneinheit am Lenker des Elektrofahrrads vorgesehenen. Alternativ oder zusätzlich ist die Bedieneinheit mittels einer Spracheingabe betätigbar. Ferner ist eine vom Elektrofahrrad separate Bedieneinheit denkbar, beispielsweise in Form eines mit der Steuereinheit signaltechnisch koppelbaren Smart Devices (Smart Phone, Smart Watch oder dergleichen).

In einer Ausführungsform des Verfahrens wird die Freigabe der Aktivierung des Schiebemodus und/oder die Aktivierung des Schiebemodus bei nicht erkannter Plausibilität des Trigger-Signals so lange ausgesetzt, bis die Plausibilität des Trigger-Signals erkannt wird. Beispielsweise ist denkbar, das Trigger-Signal trotz einmaliger oder fortwährender Auslösung bei einer zu hohen Geschwindigkeit (s.o.) ab dem Zeitpunkt als plausibel einzustufen, zu dem die Geschwindigkeit unter den oben genannten Schwellwert fällt. In einem alternativen oder zusätzlichen Ausführungsbeispiel kann anhand einer negativen Trigger-Signalflanke auf die ordnungsgemäße Funktion eines Bedienelements geschlossen werden, sodass in Folge der Detektion der negativen Trigger-Signalflanke die Plausibilisierung erfolgen kann. Auf diese Weise kann eine besonders bedienfreundliche Realisierung erreicht werden.

In einer Ausführungsform des Verfahrens wird abhängig von einer Anzahl bereitgestellter Trigger-Signale mit nicht erkannter Plausibilität und/oder abhängig von einer Dauer eines oder mehrerer bereitgestellter Trigger-Signale, insbesondere unabhängig von einem Erkennen dessen Plausibilität, eine Funktion des Elektrofahrrads ausgeführt oder beendet oder modifiziert. Insbesondere wird die Freigabe der Aktivierung und/oder die Aktivierung des Schiebemodus gesperrt, sodass der Schiebemodus nicht mehr aktiviert werden kann. Diese Sperre kann beispielsweise bis zu einem Neustart des Systems oder bis zum Ablauf einer vorgegebenen Zeitdauer anhalten. Ferner ist denkbar, dem Nutzer des Elektrofahrrads einen Hinweis (z.B. eine Warnung) auszugeben, insbesondere auf einem Bildschirm des Elektrofahrrads anzuzeigen. In einem Ausführungsbeispiel ist denkbar, die Freigabe der Aktivierung bzw. die Aktivierung des Schiebemodus zu sperren, wenn ein Trigger-Signal für mehr als 10 Sekunden bei einer Fahrgeschwindigkeit von mehr als 10 km/h anliegt und die Anforderung bei einer Geschwindigkeit von über 10 km/h begonnen hat und/oder wenn ein Trigger-Signal für mehr als 20 Sekunden bei einer Fahrgeschwindigkeit von mehr als 10 km/h anliegt und die Anforderung bei einer Geschwindigkeit von unter 10 km/h begonnen hat und/oder ein Trigger-Signal für mehr als 10 Sekunden anliegt und ein Nutzer mit ausreichend Fahrerdrehmoment pedaliert (d.h. beispielsweise, dass ein Fahrerdrehmoment und eine Trittfrequenz über vorgegebenen Schwellwerten liegen).

Ferner wird ein mit Motorkraft und/oder Pedalkraft betreibbares Elektrofahrrad mit einem elektrischen Antrieb, einem Kurbeltrieb, zumindest einem Drehmomentsensor, der dazu eingerichtet ist, ein von einem Fahrer (Nutzer) auf den Kurbeltrieb aufgebrachtes Drehmoment zu erfassen und mit einer Steuereinheit vorgeschlagen, wobei die Steuereinheit dazu eingerichtet ist, abhängig vom erfassten Drehmoment den elektrischen Antrieb anzusteuern und eine Ausführungsform des erfindungsgemäßen Verfahrens auszuführen.

### Zeichnungen

Die Erfindung ist anhand von in den Zeichnungen dargestellten Ausführungsbeispielen in der nachfolgenden Beschreibung näher erläutert. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Gleiche Bezugszeichen in den Figuren bezeichnen gleiche Elemente.

Es zeigen:
- Figur 1: eine schematische Ansicht eines Elektrofahrrads gemäß einem Ausführungsbeispiel der Erfindung;
- Figur 2: ein Verfahrensdiagramm einer Ausführungsform des erfindungsgemäßen Verfahrens;
- Figur 3: ein erweitertes Verfahrensdiagramm einer Ausführungsform des erfindungsgemäßen Verfahrens.

### Beschreibung der Ausführungsbeispiele

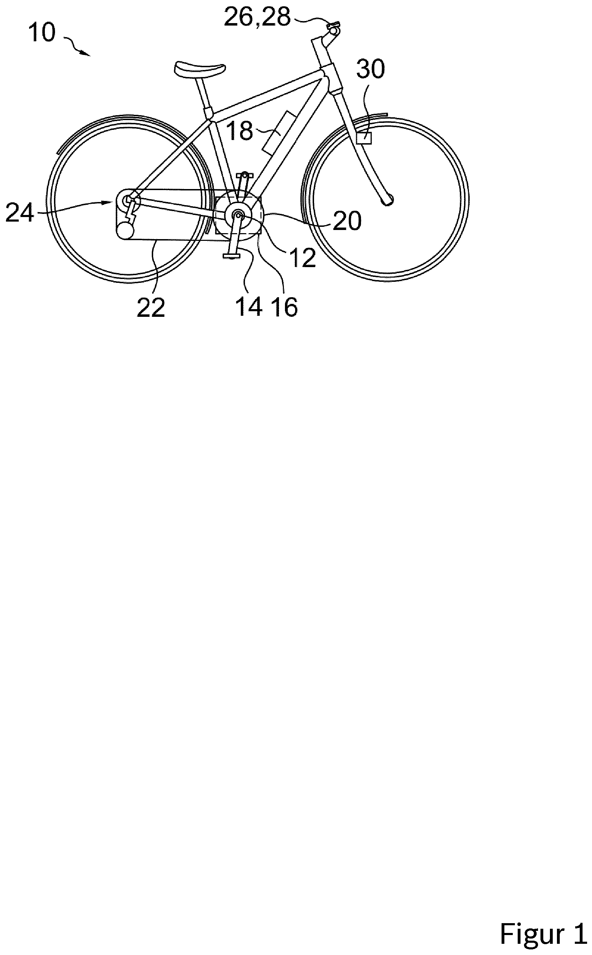

In Figur 1 ist ein Ausführungsbeispiel des erfindungsgemäßen Elektrofahrrads 10 dargestellt. Wie aus Figur 1 ersichtlich ist, umfasst das Elektrofahrrad 10 einen Kurbeltrieb 12 mit zwei Kurbeln 14 und einen elektrischen Antrieb 16. Ein Akku, der der energetischen Speisung des elektrischen Antriebs 16 dient, ist mit dem Bezugszeichen 18 bezeichnet. Ferner ist am Kurbeltrieb 12 ein Kettenblatt 20 vorgesehen, in welches eine Kette 22 eingreift, so dass ein Abtriebsdrehmoment vom Kettenblatt 20 auf ein Ritzel an einer Schaltung 24 am Hinterrad des Elektrofahrrads 10 übertragen werden kann. Weiterhin umfasst das Elektrofahrrad 10 eine Steuereinheit 26. Die Steuereinheit 26 ist mit dem elektrischen Antrieb 16 verbunden und ist eingerichtet, den elektrischen Antrieb 16 gemäß einem der nachfolgend erläuterten Verfahren zu steuern. Die Steuereinheit 26 weist eine Bedieneinheit 28 umfassend Bedienelemente auf (hier nicht näher dargestellt). Ferner weist das Elektrofahrrad 10 eine erste Sensorvorrichtung 30 auf, die hier beispielhaft der Messung einer Geschwindigkeit als einen Bewegungszustand des Elektrofahrrads 10 charakterisierenden Größe dient. Ferner weist das Elektrofahrrad 10 nicht im Detail dargestellte Sensorvorrichtungen 30 auf, die der Erfassung von Messsignalen dienen, welche eine Lage des Elektrofahrrads 10, ein auf den Kurbeltrieb 12 des Elektrofahrrads 10 aufgebrachtes Fahrerdrehmoment, eine Trittfrequenz eines Nutzers sowie eine Dauer der Bereitstellung des Trigger-Signals betreffen.

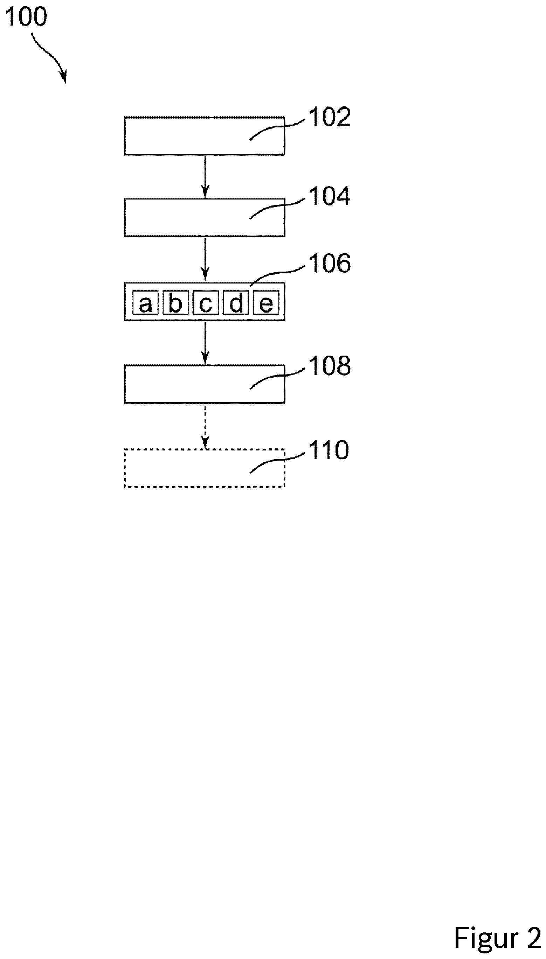

Figur 2 stellt ein Ausführungsbeispiel des Verfahrens 100 zum Steuern des mit Motorkraft und/oder Pedalkraft betreibbaren Elektrofahrrads 10 in einem Verfahrensdiagramm dar. In einem ersten Verfahrensschritt 102 wird ein Trigger-Signal zur Freigabe einer Aktivierung des Schiebemodus des Elektrofahrrads 10 an die Steuereinheit 26 des Elektrofahrrads 10 bereitgestellt, d.h. signaltechnische geleitet. Dabei wird das Trigger-Signal mittels der Bedieneinheit 28 durch einen Nutzer ausgelöst und somit der Steuereinheit 26 bereitgestellt. In Verfahrensschritt 104 wird ein Messsignal zumindest einer der Sensorvorrichtungen 30 der Steuereinheit 26 bereitgestellt. Das Verfahren 100 berücksichtigt folgende Messsignale, die der Steuereinheit 26 in Verfahrensschritt 104 regelmäßig oder im Bedarfsfall zugeleitet werden:
- ein Messsignal, welches eine Lage des Elektrofahrrads 10 betrifft;
- ein Messsignal, welches eine Geschwindigkeit des Elektrofahrrads 10 betriff;
- ein Messsignal, welches ein auf den Kurbeltrieb 12 des Elektrofahrrads 10 aufgebrachtes Fahrerdrehmoment betrifft;
- ein Messsignal, welches eine Trittfrequenz eines Nutzers betrifft;
- ein Messsignal, welches eine Dauer der Bereitstellung des Trigger-Signals betrifft.

In Verfahrensschritt 106 wird sodann eine Plausibilität des Trigger-Signals anhand des in Verfahrensschritt 104 bereitgestellten Messsignals analysiert. Je nach Messsignal wird eine Plausibilität des Trigger-Signals anhand des bereitgestellten Messsignals erkannt, wenn
a. anhand eines Messsignals, das eine Lage des Elektrofahrrads 10 betrifft, das Elektrofahrrad 10 als aufrecht positioniert erkannt wird;
b. anhand eines Messsignals, das eine Geschwindigkeit des Elektrofahrrads 10 betrifft, erkannt wird, dass die Geschwindigkeit des Elektrofahrrads eine vorbestimmte Bedingung erfüllt;
c. anhand eines Messsignals, das ein auf den Kurbeltrieb 12 des Elektrofahrrads 10 aufgebrachtes Fahrerdrehmoment betrifft, erkannt wird, dass das Fahrerdrehmoment Null beträgt;
d. anhand eines Messsignals, das eine Trittfrequenz eines Nutzers betrifft, erkannt wird, dass die Trittfrequenz Null beträgt; oder
e. anhand eines Messsignals, das eine Dauer der Bereitstellung des Trigger-Signals betrifft, erkannt wird, dass die Dauer einen vorgegebenen Schwellwert unterschreitet.

Liegt eine dieser Bedingungen a-e vor, so wird das Trigger-Signal als plausibel eingestuft und sodann in Verfahrensschritt 108 das Elektrofahrrad 10 derart gesteuert, dass der Schiebemodus aktiviert werden kann, die Aktivierung des Schiebemodus folglich freigegeben wird. In einem folgenden, optionalen Verfahrensschritt 110 ist denkbar, den nunmehr zur Aktivierung freigegebenen Schiebemodus unter Verwendung eines weiteren Messsignals einzuschalten, beispielsweise basierend auf einer weiteren Eingabe mittels der Bedieneinheit oder durch Anschieben des Elektrofahrrads 10.

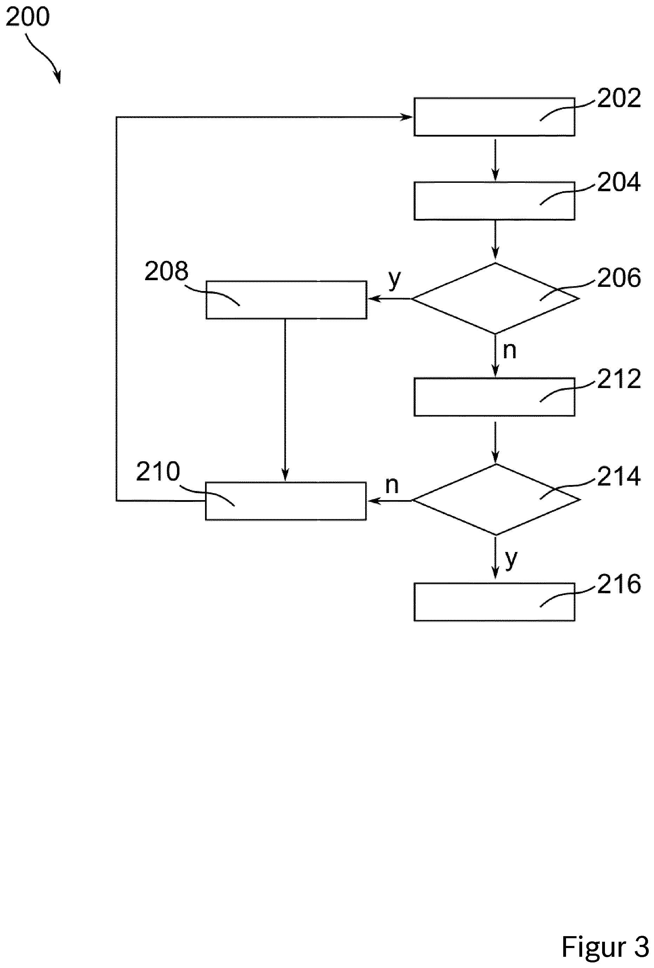

In Figur 3 ist ein erweitertes Verfahren 200 als Ablaufdiagramm dargestellt. Das Verfahren 200 geht in Verfahrensschritt 202 aus von einem Betriebszustand grundsätzlich beliebiger Art (Zustand während der Fahrt, im Stand, nach einem Unfall oder dergleichen). In diesem Verfahrensschritt 202 wird auf die Aktivierungsanforderung des Schiebemodus gewartet, d.h. auf die Auslösung eines Trigger-Signals zur Freigabe der Aktivierung. In Verfahrensschritt 204 wird ein Trigger-Signal zur Aktivierung des Schiebemodus durch die Steuereinheit 26 erfasst. Der sodann folgende Verfahrensschritt 206 umfasst die Verfahrensschritte 104 und 106 des oben erläuterten Verfahrens 100, d.h. die Analyse eines bereitgestellten Messsignals sowie darauf basierender Plausibilisierung des Trigger-Signals. Folglich ist nach Abschluss des Verfahrensschritts 206 analysiert, ob das Trigger-Signal als plausibel eingestuft werden kann (Pfad "y") oder nicht (Pfad "n"). Für den Fall, dass das Trigger-Signal als plausibel erkannt wird, wird in Verfahrensschritt 208 das Elektrofahrrad 10 derart gesteuert, dass die Aktivierung des Schiebemodus freigegeben wird (und folglich durch Erfüllen einer weiteren Bedingung aktiviert, d.h. eingeschaltet, werden kann). Die Aktivierung des Schiebemodus ist solange freigegeben, bis in Verfahrensschritt 210 ein Deaktivierungssignal in Form eines weiteren Trigger-Signals ausgelöst wird oder das Trigger-Signal zur tatsächlichen Aktivierung ausbleibt. In diesem Fall wird wieder in den Verfahrensschritt 202 gewechselt, in dem auf eine (erneute) Aktivierungsanforderung des Schiebemodus gewartet wird. Für den Fall, dass das Trigger-Signal in Verfahrensschritt 206 nicht als plausibel erkannt wird (Pfad "n"), wird in Verfahrensschritt 212 die Aktivierung des Schiebemodus nicht freigegeben. Stattdessen wird in der das Verfahren 200 ausführenden Steuereinheit 26 ein Zähler inkrementell erhöht (alternativ verringert). Im folgenden Verfahrensschritt 214 wird sodann abgefragt, ob dieser Zähler bereits eine vorgegebene Anzahl zulässiger Aktivierungsanforderungen mit nicht erkannter Plausibilität überschritten hat. Diese Anzahl kann beispielsweise drei betragen. Ist dies der Fall (Pfad "y"), so wird in Verfahrensschritt 216 die Möglichkeit der Freigabe der Aktivierung des Schiebemodus, zumindest bis zu einem Neustart der Steuereinheit 26 des Elektrofahrrads 10, komplett deaktiviert. Folglich steht diese Funktion bis zu einem Neustart der Steuereinheit 26 nicht mehr zur Verfügung. Ferner wird dem Nutzer eine Information (beispielsweise eine Warnung) ausgegeben (im Falle eines Neustarts wird der Zähler wieder neu initialisiert, beispielsweise auf Null oder auf einen zuletzt gespeicherten Wert abzüglich einer Konstante). Hat der Zähler die vorgegebene Anzahl zulässiger Aktivierungsanforderungen mit nicht erkannter Plausibilität noch nicht erreicht (oder überschritten) (Pfad "n"), wird über den Verfahrensschritt 210 - in dem das Trigger-Signal zur tatsächlichen Aktivierung ausbleibt - wieder in den Verfahrensschritt 202 gewechselt, in dem auf die Aktivierungsanforderung des Schiebemodus gewartet wird.

## Patentansprüche

1. Verfahren zum Steuern eines mit Motorkraft und/oder Pedalkraft betreibbaren Elektrofahrrads, umfassend die Verfahrensschritte
- Bereitstellen zumindest eines Trigger-Signals zur Freigabe einer Aktivierung eines Schiebemodus und/oder zur Aktivierung des Schiebemodus an eine Steuereinheit des Elektrofahrrads,
- Bereitstellen eines Messsignals einer Sensorvorrichtung betreffend eine Eigenschaft des Elektrofahrrads und/oder eine von dem Elektrofahrrad umfasste Komponente an die Steuereinheit,
- Erkennen einer Plausibilität des Trigger-Signals anhand des bereitgestellten Messsignals,
- Steuern des Elektrofahrrads, indem in Abhängigkeit des Erkennens der Plausibilität des Trigger-Signals die Aktivierung des Schiebemodus freigegeben und/oder der Schiebemodus aktiviert wird,
**dadurch gekennzeichnet, dass** das Messsignal eine Beschleunigung als einen Bewegungszustand des Elektrofahrrads betrifft und die Plausibilität des Trigger-Signals erkannt wird, wenn der Bewegungszustand eine vorbestimmte Bedingung erfüllt.

2. Verfahren nach Anspruch 1, wobei das Messsignal eine Lage des Elektrofahrrads betrifft und die Plausibilität des Trigger-Signals erkannt wird, wenn das Elektrofahrrad aufrecht positioniert ist.

3. Verfahren nach einem der vorhergehenden Ansprüche, wobei das Messsignal einen Bewegungszustand des Elektrofahrrads, insbesondere eine Geschwindigkeit, betrifft und die Plausibilität des Trigger-Signals erkannt wird, wenn der Bewegungszustand eine vorbestimmte Bedingung erfüllt.

4. Verfahren nach einem der vorhergehenden Ansprüche, wobei das Messsignal ein auf einen Kurbeltrieb des Elektrofahrrads aufgebrachtes Fahrerdrehmoment betrifft und die Plausibilität des Trigger-Signals erkannt wird, wenn das Fahrerdrehmoment Null beträgt.

5. Verfahren nach einem der vorhergehenden Ansprüche, wobei das Messsignal eine Trittfrequenz eines Nutzers betrifft und die Plausibilität des Trigger-Signals erkannt wird, wenn die Trittfrequenz Null beträgt.

6. Verfahren nach einem der vorhergehenden Ansprüche, wobei das Messsignal eine Dauer der Bereitstellung des Trigger-Signals betrifft und die Plausibilität des Trigger-Signals erkannt wird, wenn die Dauer einen vorgegebenen Schwellwert unterschreitet.

7. Verfahren nach einem der vorhergehenden Ansprüche, wobei das Trigger-Signal mittels einer Bedieneinheit durch einen Nutzer des Elektrofahrrads bereitgestellt wird.

8. Verfahren nach einem der vorhergehenden Ansprüche, wobei die Freigabe der Aktivierung des Schiebemodus und/oder die Aktivierung des Schiebemodus bei nicht erkannter Plausibilität des Trigger-Signals solange ausgesetzt wird, bis die Plausibilität des Trigger-Signals erkannt wird.

9. Verfahren nach einem der vorhergehenden Ansprüche, wobei abhängig von einer Anzahl bereitgestellter Trigger-Signale mit nicht erkannter Plausibilität und/oder abhängig von einer Dauer eines bereitgestellten Trigger-Signals, insbesondere unabhängig von einem Erkennen dessen Plausibilität, eine Funktion des Elektrofahrrads ausgeführt oder beendet oder modifiziert wird.

10. Verfahren nach einem der vorhergehenden Ansprüche, wobei das Trigger-Signal zusätzlich zur Freigabe einer Aktivierung des Schiebemodus auch zur Aktivierung des Schiebemodus genutzt wird.

11. Mit Motorkraft und/oder Pedalkraft betreibbares Elektrofahrrad mit einem elektrischen Antrieb, einem Kurbeltrieb, zumindest einem Drehmomentsensor, der dazu eingerichtet ist, ein von einem Fahrer auf den Kurbeltrieb aufgebrachtes Drehmoment zu erfassen und mit einer Steuereinheit, wobei die Steuereinheit dazu konfiguriert ist, abhängig vom erfassten Drehmoment den elektrischen Antrieb anzusteuern, **dadurch gekennzeichnet, dass** die Steuereinheit ferner dazu eingerichtet ist, ein Verfahren nach einem der Ansprüche 1 bis 10 auszuführen.

## Claims

1. Method for controlling an electric bicycle that can be operated with motor force and/or pedal force, comprising the method steps of
- providing a control unit of the electric bicycle with at least one trigger signal for enabling the activation of a walk mode and/or for activating the walk mode,
- providing the control unit with a measurement signal of a sensor device relating to a property of the electric bicycle and/or relating to a component comprised by the electric bicycle,
- identifying a plausibility of the trigger signal on the basis of the provided measurement signal,
- controlling the electric bicycle by enabling the activation of the walk mode and/or activating the walk mode in accordance with the identification of the plausibility of the trigger signal,
**characterized in that** the measurement signal relates to an acceleration as a state of motion of the electric bicycle and the plausibility of the trigger signal is identified when the state of motion meets a predetermined condition.

2. Method according to Claim 1, wherein the measurement signal relates to a position of the electric bicycle and the plausibility of the trigger signal is identified when the electric bicycle is in an upright position.

3. Method according to either one of the preceding claims, wherein the measurement signal relates to a state of motion of the electric bicycle, in particular a speed, and the plausibility of the trigger signal is identified when the state of motion meets a predetermined condition.

4. Method according to any one of the preceding claims, wherein the measurement signal relates to a rider torque applied to a crank drive of the electric bicycle and the plausibility of the trigger signal is identified when the rider torque is zero.

5. Method according to any one of the preceding claims, wherein the measurement signal relates to a cadence of the user and the plausibility of the trigger signal is identified when the cadence is zero.

6. Method according to any one of the preceding claims, wherein the measurement signal relates to a duration of the provision of the trigger signal and the plausibility of the trigger signal is identified when the duration falls below a predetermined threshold value.

7. Method according to any one of the preceding claims, wherein the trigger signal is provided by means of an operating unit by a user of the electric bicycle.

8. Method according to any one of the preceding claims, wherein the enabling of the activation of the walk mode and/or the activation of the walk mode is suspended when the plausibility of the trigger signal is not identified until the plausibility of the trigger signal is identified.

9. Method according to any one of the preceding claims, wherein a function of the electric bicycle is executed or terminated or modified depending on a number of provided trigger signals with unidentified plausibility and/or depending on a duration of a provided trigger signal, in particular independently of the identification of the plausibility thereof.

10. Method according to any one of the preceding claims, wherein, in addition to the enabling of the activation of the walk mode, the trigger signal is also used for the activation of the walk mode.

11. Electric bicycle that can be operated with motor force and/or pedal force having an electric drive, a crank drive, at least one torque sensor designed to detect a torque applied by a rider to the crank drive and having a control unit, wherein the control unit is configured to actuate the electric drive depending on the torque measured, **characterized in that** the control unit is also configured to carry out a method according to any one of Claims 1 to 10.

## Revendications

1. Procédé de commande d'une bicyclette électrique pouvant fonctionner au moyen d'une force motrice et/ou d'une force exercée sur la pédale, comprenant les étapes de procédé consistant à
- fournir à une unité de commande de la bicyclette électrique au moins un signal de déclenchement pour l'autorisation de l'activation d'un mode de poussée et/ou pour l'activation du mode de poussée,
- fournir à l'unité de commande un signal de mesure provenant d'un dispositif capteur concernant une propriété de la bicyclette électrique et/ou un composant que comprend la bicyclette électrique,
- détecter une plausibilité du signal de déclenchement sur la base du signal de mesure fourni,
- commander la bicyclette électrique en autorisant l'activation du mode de poussée et/ou en activant le mode de poussée en fonction de la détection de la plausibilité du signal de déclenchement,
**caractérisé en ce que** le signal de mesure concerne une accélération en tant qu'état de mouvement de la bicyclette électrique et la plausibilité du signal de déclenchement est détectée lorsque l'état de mouvement satisfait à une condition prédéterminée.

2. Procédé selon la revendication 1, dans lequel le signal de mesure concerne une position de la bicyclette électrique et la plausibilité du signal de déclenchement est détectée lorsque la bicyclette électrique est positionnée verticalement.

3. Procédé selon l'une quelconque des revendications précédentes, dans lequel le signal de mesure concerne un état de mouvement de la bicyclette électrique, en particulier une vitesse, et la plausibilité du signal de déclenchement est détectée lorsque l'état de mouvement satisfait à une condition prédéterminée.

4. Procédé selon l'une quelconque des revendications précédentes, dans lequel le signal de mesure concerne un couple exercé par le conducteur à un pédalier de la bicyclette électrique, et la plausibilité du signal de déclenchement est détectée lorsque le couple exercé par le conducteur est nul.

5. Procédé selon l'une quelconque des revendications précédentes, dans lequel le signal de mesure concerne une fréquence de pédalage d'un utilisateur et la plausibilité du signal de déclenchement est détectée lorsque la fréquence de pédalage est nulle.

6. Procédé selon l'une quelconque des revendications précédentes, dans lequel le signal de mesure concerne une durée de fourniture du signal de déclenchement et la plausibilité du signal de déclenchement est détectée lorsque la durée s'abaisse en dessous d'une valeur de seuil prédéfinie.

7. Procédé selon l'une quelconque des revendications précédentes, dans lequel le signal de déclenchement est fourni par un utilisateur de la bicyclette électrique au moyen d'un module de commande.

8. Procédé selon l'une quelconque des revendications précédentes, dans lequel l'autorisation de l'activation du mode de poussée et/ou l'activation du mode de poussée lorsque la plausibilité du signal de déclenchement n'est pas détectée est suspendue jusqu'à ce que la plausibilité du signal de déclenchement soit détectée.

9. Procédé selon l'une quelconque des revendications précédentes, dans lequel une fonction de la bicyclette électrique est exécutée ou interrompue ou modifiée en fonction d'un nombre de signaux de déclenchement fournis avec une plausibilité non détectée et/ou en fonction d'une durée d'un signal de déclenchement fourni, en particulier indépendamment d'une détection de sa plausibilité.

10. Procédé selon l'une quelconque des revendications précédentes, dans lequel le signal de déclenchement est également utilisé, en plus de l'autorisation d'une activation du mode de poussée, pour l'activation du mode de poussée.

11. Bicyclette électrique pouvant fonctionner au moyen d'une force motrice et/ou d'une force exercée sur la pédale, comprenant un entraînement électrique, un pédalier, au moins un capteur de couple qui est conçu pour détecter un couple appliqué au pédalier par un conducteur et comprenant une unité de commande, l'unité de commande étant conçue pour commander l'entraînement électrique en fonction du couple détecté, **caractérisée en ce que** l'unité de commande est en outre conçue pour mettre en œuvre un procédé selon l'une quelconque des revendications 1 à 10.
